# EUROPÄISCHE PATENTSCHRIFT

(11) **EP 0 458 172 B1**
(45) Veröffentlichungstag und Bekanntmachung des Hinweises auf die Patenterteilung: **14.12.1994**
(21) Anmeldenummer: 91107820.2
(22) Anmeldetag: 15.05.1991
(51) Int. Cl.: B09B 3/00, C08J 11/02

(54) **Verfahren zur Beseitigung von Treibmitteln aus Kunststoffschäumen sowie Vorrichtung hierfür**
Process for removing blowing agents from resin foams and device
Procédé pour la récupération d'agents gonflants et dispositif

(30) Priorität: 22.05.1990 DE 4016512
(43) Veröffentlichungstag der Anmeldung: 27.11.1991
(73) Patentinhaber: ADELMANN Aktiengesellschaft, D-97753 Karlstadt (DE)
(72) Erfinder: Adelmann, Waldemar, D-8782 Karlstadt (DE)
(74) Vertreter: Pöhner, Wilfried Anton, Dr.

(56) Entgegenhaltungen:
- EP-A- 0 336 254
- DE-A- 3 828 912
- DE-A- 3 903 141
- DE-U- 8 914 957
- DE-U- 9 001 655
- US-A- 4 531 950
- KUNSTSTOFFE. Bd. 80, Nr. 4, April 1990,MUNCHEN DE Seite 509; 'FCKW AUS PUR-ISOLIERSCHAUM RÜCKGEWINNEN'

## Beschreibung

Die Erfindung betrifft ein verfahren zur Beseitigung von Treibmitteln, insbesondere FCKW (Fluorchlorkohlenwasserstoffe) aus Kunststoffschäumen, bei dem der Kunststoffschaum verdichtet wird sowie eine Vorrichtung zur Durchführung dieses Verfahrens.

Bekanntermaßen sind Kunststoffschäume poröse und sehr leichte Stoffe aus verschiedenen Plasten, wie z.B. Polyurethanharzen (PUR), die durch Verschäumen mit Treibmitteln hergestellt werden.
Hierfür werden häufig Fluorchlorkohlenwasserstoffe (FCKW) eingesetzt, von denen in jüngster Zeit bekannt geworden ist, daß bereits geringste Mengen, die in die Luft entweichen, zu einer erheblichen Zerstörung der die Erde umgebenden und vor Eindringen ungünstiger Strahlung schützenden Ozonschicht führen. Zum Schutze der Umwelt werden deshalb in jüngster Zeit erhebliche Anstrengungen unternommen, Fluorchlorkohlenwasserstoffe nicht mehr in die Atmosphäre entweichen zu lassen. Hierzu zählt die Beseitigung insbesondere harter und mit FCKW als Treibmittel hergestellter Kunststoffschäume, wie sie als wärme- und schalldämmendes Matrial z.B. in der Kältetechnik und im Kühlschrankbau eingesetzt werden, in deren Poren das Treibmittel eingeschlossen ist.

Kern der Entsorgung ist das Auslösen des Treibmittels aus den Poren und die Trennung von Kunststoffschaum.
Zwar läßt sich das Treibmittel grundsätzlich dadurch gewinnen, daß der Kunststoffschaum fein zermahlen wird. Diese Möglichkeit verbietet sich bereits deshalb, da das Ausgangsmaterial feucht ist und das erhaltene Mahlgut verklebt und verklumpt. Zudem ist der erforderliche Aufwand beim Zermahlen des Kunststoffschaumes und bei der zuverlässigen Trennung des Treibmittels von der umgebenden Luft und Staub erheblich.
Weiter ist aus der auf die Anmelderin zurückgehenden nicht vorveröffentlichten DE-A-39 03 141 bekannt, den Kunststoffschaum durch ein hin- und hergehendes Schlagorgan stoßartig zu bearbeiten und hierdurch das Treibmittel freizusetzen. Es hat sich gezeigt, daß die Ausbeute an Treibmittel nicht zufriedenstellend ist.

In dem ebenfalls auf die Anmelderin zurückgehenden Artikel "FCKW aus PUR-Isolierschaum rückgewinnen", Kunststoffe, Bd. 80, Nr. 4, Seite 509, April 1990 ist ein Verfahren sowie eine Vorrichtung gattungsgemäßer Art beschrieben. Der Kunststoffschaum wird mittels einer Brikettierpresse komprimiert, so daß das Treibmittel herausgepreßt und freigesetzt wird. Auch hier ist die unzureichende Ausbeute an Treibmittel als nachteilig anzusehen.

Hiervon ausgehend hat sich die Erfindung die Schaffung eines Verfahrens zur Aufgabe gemacht, bei dem Treibmittel möglichst weitgehend aus Kunststoffschaum entfernt wird.

Gelöst wird diese Aufgabe erfindungsgemäß dadurch, daß der Kunststoffschaum nach dem Verdichten in einer gasdichten Anlage zerkleinert wird und daß die hierbei freigesetzten Treibmittel abgesaugt werden.

Das vorgeschlagene Verfahren besteht aus Zwei sukzessiven Schritten: Beim ersten wird das Kunststoffmaterial verdichtet und komprimiert. Durch den hohen Druck, mit dem eine Temperaturerhöhung einhergeht, verdampft das Treibmittel insbesondere dann, wenn es wie der Fluorchlorkohlenwasserstoff eine Verdampfungstemperatur von 23,8 Grad Celsius besitzt. Aufgrund der Verdichtung entsteht eine Verhärtung der Oberfläche des Kunststoffschaumes, so daß die gasförmigen Treibmittel nicht ohne weiteres nach außen gelangen und freigesetzt werden können. Zu diesem Zweck muß der nunmehr verdichtete Kunststoffschaum zerkleinert werden, so daß das Treibmittel entweichen kann. Während der Zerkleinerung erfolgt das Ausgasen. Das Treibmittel wird zusammen mit Luft abgesaugt, getrennt und gesammelt. Um ein Entweichen des Treibmittels in die Atmosphäre zu verhindern, erfolgt zumindest die Zerkleinerung in einem gasdichten Raum.

Das erfindungsgemäße Verfahren eignet sich für Kunststoffschäume unterschiedlichster chemischer Zusammensetzung und ist insbsondere auch für Polyurethanharze geeignet. Ebenso ist das verwendete Treibmittel grundsätzlich beliebig. Die aufzuwendenden Drucke sind umso geringer, je niedriger die Verdampfungstemperatur des Treibmittels ist, weshalb sich aufgrund einer Verdampfungstemperatur von 23,8 Grad Celsius das Verfahren insbesondere für die Gewinnung von Fluorchlorkohlenwasserstoffen eignet. Der entscheidende Vorteil des erfindungsgemäßen Verfahrens besteht darin, daß durch vergleichsweise geringen Aufwand das Treibmittel bis auf einen minimalen Restgehalt freisetzbar ist.

Die Art und Weise der Verdichtung des Kunststoffschaumes ist im Rahmen der Erfindung grundsätzlich beliebig. Als besonders vorteilhaft wird das Brikettieren angesehen.

Um ein unerwünschtes Entweichen des Treibmittels in die Atmosphäre auszuschließen, wird zumindest der durch das Zerkleinern definierte Ausgasprozeß in einer gasdichten Anlage vorgenommen.
Ein Entweichen des Treibmittels wird fast ganz unterbunden, wenn, wie weiter vorgeschlagen, die Anlage bei Unterdruck arbeitet, so daß aufgrund des Druckgradienten dem Entweichen des Treibmittels zusätzlich entgegengewirkt wird.

Um den Restgehalt an Treibmittel weiter zu verringern, wird in einer besonders bevorzugten Ausführungsform vorgeschlagen, vor dem soeben beschriebenen Prozeß den Kunststoffschaum zu zerschneiden und das hierbei freiwerdende Treibmittel ebenfalls abzusaugen. Unter dem Begriff "Zerschneiden" ist im Sinne der Erfindung und im Gegensatz zum Zerreiben eine Zerkleinerung ohne gleichzeitiges Erwärmen des Materials zu verstehen. Beim Zerschneiden tritt keine Erwärmung in nennenswertem Umfang auf. Das Zerreiben (oder auch Zermahlen) bewirkt zum einen eine Zerstörung eines Teil der Poren, so daß bereits hierdurch Treibmittel freigesetzt wird. Je nach dem Grad der Feinheit des Zerreibens (die Erzeugung von Mehl ist aus den oben genannten Gründen unerwünscht) bleibt ein gewisser Anteil an Zellen unzerstört. Auch hier bewirkt die durch das Zerreiben erzeugte Wärme ein Verdampfen des Treibmittels und ein zusätzliches Freisetzen von Treibmittel. Auch hier erfolgt der Prozeß in einer gasdichten Anlage, und das Treibmittel wird mit Beimengungen von Luft abgesaugt.

Im allgemeinen läßt sich nicht vermeiden, daß das Treibmittel beim Absaugen Beimengungen von Luft aufweist. Eine Trennung kann dann vorteilhaft durch Kondensation vorgenommen werden.

Im folgenden werden Vorrichtungen beschrieben, die sich, jedoch ohne Beschränkungen der Allgemeinheit, in besonderer Weise zur Verwirklichung und Umsetzung des erfindungsgemäßen Verfahrens eignen. So erfolgt die Verdichtung des Kunststoffschaumes mit Hilfe einer Brikettierpresse, an die zum Freisetzen des Treibmittels ein Zerkleinerungsorgan anschließt und die eine Absaugvorrichtung aufweist. Im speziellen ist das Zerkleinerungsorgan ein Schneckenförderer. Die Briketts werden eingegeben, durch die Schnecke gebrochen, wodurch Treibmittel, unterstützt durch die hierbei zusätzlich entstehende Wärme, freigesetzt wird.

Für das Zerschneiden des Kunststoffschaumes noch vor der Verdichtung wird der Brikettierpresse eine Mühle vorgeschaltet. Sie soll den Kunststoffschaum unter Vermeidung der Entstehung von Mehl in würfelgroße Elemente zerkleinern. Auch hierdurch wird ein Teil des Treibmittels, allerdings im Sinne eines Grobverfahrens, beseitigt. Ein minimaler Restgehalt läßt sich aufgrund dieser Methode nicht erreichen.

Eine konkrete Realisierung dieser Mühle besteht in der Anordnung von Schneidradpaaren über einem Lochsieb. Das eingefüllte Ausgangsmaterial wird durch die gegenläufig sich drehenden Schneidräder zerkleinert, zum Sieb hin gefördert und durch dieses hindurchgepreßt.

Weitere Einzelheiten, Merkmale und Vorteile der Erfindung lassen sich dem nachfolgend anhand der Zeichnungen näher erläuterten Ausführungsbeispiel entnehmen. Es zeigen
- Figur 1: eine erfindungsgemäße Anlage in schematisch gehaltener Seitenansicht,
- Figur 2: ein der in Figur 1 gezeigten Anlage vorgeschaltetes Zerkleinerungsorgan.

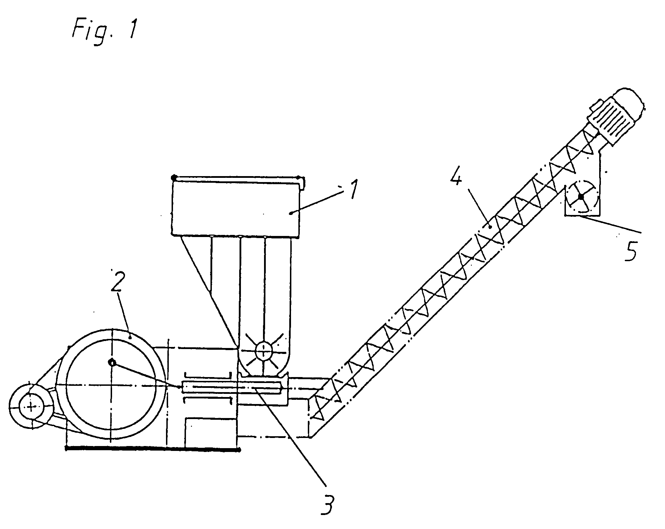

In Figur 1 befindet sich der das Ausgangsmaterial aufnehmende Vorratsbehälter oberhalb einer Brikettierpresse (2), in der, wie angedeutet ist, ein bewegter Kolben (3) das zugeführte Material verpreßt und in verdichtetem Zustand in horizontaler Richtung nach außen schiebt.

Dort befindet sich ein Schneckenförderer (4), der den verdichteten komprimierten Kunststoffschaum in Form eines Briketts aufnimmt, zerkleinert und abtransportiert. Erst dann können die bislang durch die hochverdichtete Oberfläche im Inneren festgehaltenen Treibmittel, unterstützt durch die durch das Zerreiben hervorgerufene Erwärmung freigesetzt und über eine Absaugvorrichtung (5) aufgesammelt und beseitigt werden.
Das Ergebnis ist ein minimaler Restgehalt an Treibmittel.

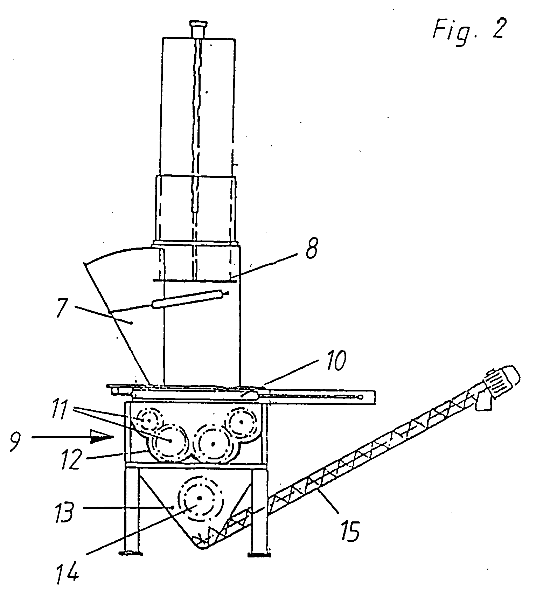

Eine entscheidende Verbesserung des Wirkungsgrades läßt sich dadurch erreichen, wenn das in Figur 2 gezeigte Zerkleinerungsorgan vorgeschaltet wird, so daß der Brikettierpresse (2) vorzerkleinertes und teilweise entgastes Kunststoffschaummaterial zugeführt wird.
Das Ausgangmaterial wird über einen Einfüllschacht (7) eingefüllt und über eine Eindrückvorrichtung (8) einer Mühle (9) zugeführt. Dazwischen ist zur Abdichtung ein Schleusenschieber (10) angeordnet.

Die Mühle (9) besteht aus Schneidradpaaren (11) sowei einem Lochsieb (12). Das Zerkleinern geschieht einmal durch die Schneidradpaare selbst und im anschließenden Durchpressen des Materials durch das Lochsieb (12).

Unterhalb befindet sich ein Auffangbhälter (13), von dem eine Absaugleitung (14) das Treibmittel entfernt, die dort sich ansammelnden Kunststoffschaumpartikel werden über einen Schneckenförderer (15) zum Vorratsbehälter (1) der in Figur 1 gezeigten Anlage transportiert.

Im Ergebnis gestattet die erfindungsgemäße Anlage die Beseitigung von Treibmitteln und hier insbesondere von Fluorchlorkohlenwasserstoffen (FCKW) bis zu einem minimalen Restgehalt.

## Patentansprüche

1. Verfahren zur Beseitigung von Treibmitteln, insbesondere Fluorchlorkohlenwasserstoffen (FCKW) aus Kunststoffschäumen, bei dem der Kunststoffschaum verdichtet wird, **dadurch gekennzeichnet,** daß der Kunststoffschaum nach dem Verdichten in einer gasdichten Anlage zerkleinert wird und daß die hierbei freigesetzten Treibmittel abgesaugt werden.

2. Verfahren nach Anspruch 1, **dadurch gekennzeichnet,** daß der Kunststoffschaum brikettiert wird.

3. Verfahren nach Anspruch 1 oder 2, **dadurch gekennzeichnet,** daß bei Unterdruck gearbeitet wird.

4. Verfahren nach einem der Ansprüche 1 bis 3, **dadurch gekennzeichnet,** daß der Kunststoffschaum in einer gasdichten Anlage vor der Verdichtung zerrieben und die hierbei freiwerdenden Treibmittel abgesaugt werden.

5. Verfahren nach einem der Ansprüche 1 bis 4, **dadurch gekennzeichnet,** daß das abgesaugte Treibmittel kondensiert wird.

6. Vorrichtung zur Durchführung des Verfahrens nach einem der Ansprüche 1 bis 5, mit einer Brikettierpresse (2) sowie einer Absaugvorrichtung (5), **gekennzeichnet durch** ein sich an die Brikettierpresse (2) anschließendes Zerkleinerungsorgan.

7. Vorrichtung nach Anspruch 6, **dadurch gekennzeichnet,** daß das Zerkleinerungsorgan ein Schneckenförderer (4) ist.

8. Vorrichtung nach Anspruch 6 oder 7, **dadurch gekennzeichnet,** daß der Brikettierpresse (2) eine Mühle (9) vorgeschaltet ist.

9. Vorrichtung nach Anspruch 8, **dadurch gekennzeichnet,** daß als Mühle (9) Schneidradpaare (11) über einem Lochsieb (12) angeordnet sind.

## Claims

1. Method for removing foaming agents, especially fluorochlorinated hydrocarbons, from plastic foams whereby the foamed plastic is compressed, **wherein** the plastic foam is comminuted in a gas-tight unit after compressing and the foaming agent released thereby is sucked off.

2. Method according to claim 1, **wherein** the plastic foam is compressed into briquettes.

3. Method according to claim 1 or 2, **wherein** work is executed under negative pressure.

4. Method according to one of claims 1 to 3, **wherein** the plastic foam is comminuted in a gas-tight unit before compressing and the foaming agent released thereby is sucked off.

5. Method according to one of claims 1 to 4, **wherein** the foaming agent sucked off is condensed.

6. Device for the execution of the method according to one of claims 1 to 5, having a briquetting press (2), as well as an sucking off device (5), **wherein** a comminution element is connected to said briquetting press (2).

7. Device according to claim 6, **wherein** said comminution element is a helical screw (4).

8. Device according to claims 6 or 7, **wherein** a mill (9) precedes said briquetting press (2)

9. Device according to claim 8, **wherein** said mill (9) comprises pairs of rotary cutters (11) disposed above a perforated sieve (12).

## Revendications

1. Procédé pour la récupération d'agents gonflants, en particulier d'hydrocarbure chlorofluoré (HCF), de mousses de matière plastique, selon lequel la mousse de matière plastique est compactée, **caractérisé en ce que** la mousse de matière plastique est broyée, après le compactage, dans une installation étanche aux gaz et en ce que les agents gonflants qui se trouvent ainsi libérés sont aspirés.

2. Procédé suivant la revendication 1, **caractérisé en ce que** la mousse de matière plastique est briquettée.

3. Procédé suivant l'une des revendications 1 et 2, **caractérisé en ce qu'**on travaille en dépression.

4. Procédé suivant l'une des revendications 1 à 3, **caractérisé en ce que** la mousse de matière plastique, avant d'être compactée, est fragmentée dans une installation étanche aux gaz et en ce que les agents gonflants qui se trouvent ainsi libérés sont aspirés.

5. Procédé suivant l'une des revendications 1 à 4, **caractérisé en ce que** l'agent gonflant aspiré est condensé.

6. Dispositif pour la mise en oeuvre du procédé suivant l'une des revendications 1 à 5, comportant une presse à briquetter (2) ainsi qu'une installation d'aspiration (5) **caractérisé par** un organe de broyage qui est associé à la presse à briquetter (2).

7. Dispositif suivant la revendication 6, **caractérisé en ce que** l'organe de broyage est un convoyeur à vis (4).

8. Dispositif suivant l'une des revendications 6 ou 7, **caractérisé en ce qu'**un moulin (9) est disposé en amont de la presse à briquetter (2).

9. Dispositif suivant la revendication 8, **caractérisé en ce que** comme moulin (9), des paires de molettes de coupe (11) sont disposées au-dessus d'un tamis en tôle perforée (12).
